# EUROPÄISCHE PATENTANMELDUNG

(11) **EP 1 318 329 A2**
(43) Veröffentlichungstag der Anmeldung: **11.06.2003**
(21) Anmeldenummer: 02022722.9
(22) Anmeldetag: 11.10.2002
(51) Int. Cl.: F16H 1/22, F16H 37/04

(54) **Getriebe für eine Windkraftanlage**

(30) Priorität: 06.12.2001 DE 10159973
(71) Anmelder: Winergy AG, 46562 Voerde (DE)
(72) Erfinder: Hulshof, Frans, 7102 KD Winterswijk (NL)
(74) Vertreter: Radünz, Ingo, Dipl.-Ing.

(57) **Zusammenfassung**

Ein Getriebe für eine aus Rotor und Generator bestehende Windkraftanlage ist mit einer mit dem Rotor verbundenen Planetenstufe als erster Stufe einer Leistungsverteilung und mit einer der Planetenstufe nachgeordneten und von dieser angetriebenen Stirnradstufe versehen. Die Stirnradstufe ist als zweite Stufe der Leistungsverteilung ausgebildet und weist ein von der Planetenstufe angetriebenes Großzahnrad (8) auf. Das Großzahnrad (8) ist von mindestens zwei Ritzelwellen (10) umgeben, deren Zahnritzel (9) mit dem Großzahnrad (8) kämmen. Die Ritzelwellen (10) tragen je ein Zahnrad (11a, 11b). Zwei Zahnräder (11a, 11b) bilden jeweils ein Räderpaar, sind wechselweise vor und hinter dem Großzahnrad (8) angeordnet, sind mit einer Schrägverzahnung von unterschiedlicher Steigungsrichtung versehen und stehen mit einer gemeinsamen, doppelschrägverzahnten, axial frei gelagerten Ritzelwelle (13) in Eingriff, die als Ausgangswelle (14) ausgebildet und mit dem Generator verbunden ist.

## Beschreibung

Die Erfindung betrifft ein Getriebe für eine aus Rotor und Generator bestehende Windkraftanlage mit den Merkmalen des Oberbegriffes des Anspruches 1.

Es sind Aufsteckgetriebe für Windkraftanlagen mit einer inneren Leistungsverzweigung in der Form einer Planetenstufe bekannt, wobei das Getriebe in der Regel eine An- und eine Abtriebswelle hat. Dieser Planetenstufe sind entweder eine weitere Planetenstufe (EP-A 635 639, EP-A 1 045 140) oder sind zwei Stirnradstufen (DE-A 198 57 914) nachgeschaltet. Die Stirnradstufen sind einfach schrägverzahnt ausgeführt.

Aufsteckgetriebe in Windkraftanlagen werden meist durch einen Pressverband mit der Rotorwelle verbunden. Bei dieser Ausführungsart ist die Nabe des Pressverbandes in den meisten Fällen Bestandteil eines Planetenträgers und im Getriebegehäuse gelagert. Solche Planetenstufen können 3, 4, 5 oder sogar 6 Planetenräder enthalten.

Je höher die von dem Rotor der Windkraftanlage auf das Getriebe zu übertragene Leistung wird, desto schwerer und lauter werden die bekannten Getriebeanordnungen.

Der Erfindung liegt die Aufgabe zugrunde, das gattungsgemäße, für eine Windkraftanlage vorgesehene Getriebe derart zu gestalten, dass ein kompakter, leichter und geräuscharmer Antrieb für hohe Drehzahlen und hohe zu übertragende Drehmomente entsteht, der außerdem eine weitgehende Demontage und Austausch von Teilen auf dem Turm der Windkraftanlage bei begrenzter Krankapazität ermöglicht.

Die Aufgabe wird bei einem gattungsgemäßen Getriebe erfindungsgemäß durch die kennzeichnenden Merkmale des Anspruches 1 gelöst. Vorteilhafte Ausgestaltungen der Erfindung sind Gegenstand der Unteransprüche.

Durch die Verwendung einer weiteren Leistungsverzweigung in der der Planetenstufe nachgeschalteten Stirnradstufe entsteht ein Getriebe, das sich auch bei hohen zu übertragenden Drehmomenten durch ein geringeres Gewicht und ein geringeres Bauvolumen auszeichnet. Da sich die Stirnräder radial ausbauen lassen, wenn sie beiderseits von entsprechend gelegten Gehäuseteilfugen in dem Getriebegehäuse angeordnet sind, besteht die Möglichkeit, dass sich möglichst viele Teile des Getriebes auf dem Turm der Windkraftanlage vor Ort austauschen lassen.

Durch die Doppelschrägverzahnung der Ritzelwellen sind diese Wellen im Vergleich mit einfachverzahnten Ritzelwellen bei gleichem Schrägungswinkel und gleicher Belastung je Zahnhälfte frei von äußeren Axialkräften. Durch die bei den Doppelschrägverzahnungen üblichen relativ hohen Schrägungswinkeln ergeben sich geräuscharme Verzahnungen. Durch die fehlende Axiallagerung kann diese Welle sich axial so einstellen, dass eine gleichmäßige Lastverteilung gegeben ist. Durch die axial frei schwimmende Welle werden zur Lagerung der Welle nur Radiallager benötigt. Diese Radiallager sind bevorzugt als Zylinderrollenlager ausgebildet, die sehr hohe Drehzahlen zulassen.

Mehrere Ausführungsbeispiele der Erfindung sind in der Zeichnung dargestellt und werden im Folgenden näher erläutert. Es zeigen:
- Fig. 1: einen Längsschnitt durch ein Getriebe,
- Fig. 2: die Seitenansicht zu Fig. 1 mit einer Anordnung der Achsen der Stirnradstufen und der Gehäuseteilfugen,

- Fig. 3: einen Längsschnitt durch ein Getriebe gemäß einer anderen Ausführungsform,
- Fig. 4: die Seitenansicht zu Fig. 3 mit einer Anordnung der Achsen der Stirnradstufen und der Gehäuseteilfugen,
- Fig. 5: einen Längsschnitt durch ein Getriebe gemäß einer weiteren Ausführungsform und
- Fig. 6: die Seitenansicht zu Fig. 5 mit einer Anordnung der Achsen der Stirnradstufen und der Gehäuseteilfugen.

Das dargestellte Getriebe ist auf dem Turm einer Windkraftanlage angeordnet und dient zum Antrieb eines oder mehrerer Generatoren durch einen Flügel tragenden Rotor. Das Getriebe ist in einem Getriebegehäuse 1 untergebracht und umfasst eine Planetenstufe als eine erste Stufe einer Leistungsverzweigung und zwei oder drei nachgeschalteten Stirnradstufen als eine zweite Stufe der Leistungsverzweigung.

Die Planetenstufe des Getriebes umfasst einen Planetenträger 2, der über eine Hohlwelle 3 und einen Pressverband mit der Rotorwelle des Rotors verbunden und in dem Getriebegehäuse 1 gelagert ist. In dem Planetenträger 2 sind mehrere Planetenräder 4 drehbar gelagert. Die Planetenräder 4 stehen einerseits mit einem fest im Getriebegehäuse 1 angeordneten Hohlrad 5 und andererseits mit einem zentralen Sonnenrad 6 in Eingriff. Das Sonnenrad 6 ist Bestandteil einer Sonnenradwelle 7. Die Sonnenradwelle 7 ist hohl und von einer Welle 18 durchdrungen, die mit dem Planetenträger 2 verbunden und in dem Getriebegehäuse 1 auf der dem Planetenträger 2 abgewandten Seite gelagert ist.

Die Sonnenradwelle 7 trägt außer dem Sonnenrad 6 ein außenverzahntes Großzahnrad 8, das zu der Stirnradstufe gehört. Das Großzahnrad 8 ist mit einer Schrägverzahnung versehen, in die die Zahnritzel 9 zweier Ritzelwellen 10 eingreifen. Jede Ritzelwelle 10 trägt ein Zahnrad 11a, 11b, wobei die beiden Zahnräder 11a, 11b ein Räderpaar bilden und wechselseitig vor und hinter dem Großzahnrad 8 angeordnet sind. Die Zahnräder 11a, 11b der beiden Ritzelwellen 10 weisen eine Schrägverzahnung mit unterschiedlicher Steigungsrichtung auf, die je nach Anordnung der Zahnräder 11a, 11b im Getriebe einmal links- und einmal rechtssteigend ist. Diese Zahnräder 11a, 11b stehen mit zwei Zahnritzeln 12 einer doppelschrägverzahnten gemeinsamen Ritzelwelle 13 in Eingriff, die axial frei gelagert ist. Diese axiale Bewegungsfreiheit sorgt dafür, dass die Axialkräfte aus den Zahneingriffen der Schrägverzahnungen gleich groß sind und somit auch die Drehmomente in den Zahnritzeln 12 gleich groß sind. Die gemeinsame Ritzelwelle 13 dient als Ausgangswelle 14 und ist mit dem Generator der Windkraftanlage verbunden.

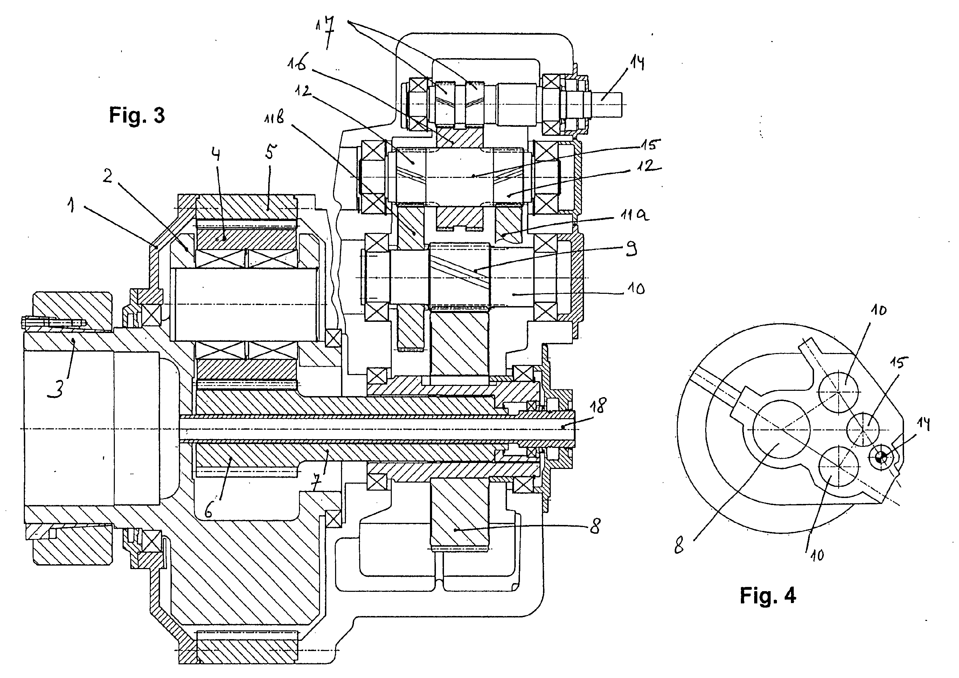

Bei dem in den Fig. 3 und 4 dargestellten Getriebe ist zur Erhöhung des Gesamtübersetzungsverhältnisses zwischen der Ritzelwelle 10 mit den ein Räderpaar bildenden Zahnrädern 11a, 11b und der als Ausgangswelle 14 dienenden Ritzelwelle 13 eine weitere Stirnradstufe angeordnet. Diese Stirnradstufe besteht aus einer ebenfalls doppelschrägverzahnten und axial frei gelagerten Ritzelwelle 15. Diese doppelschrägverzahnte Ritzelwelle 15 trägt ein doppelschrägverzahntes Zahnrad 16, das mit entsprechend schrägverzahnten Zahnritzeln 17 der doppelschrägverzahnten Ausgangswelle 14 in Eingriff steht.

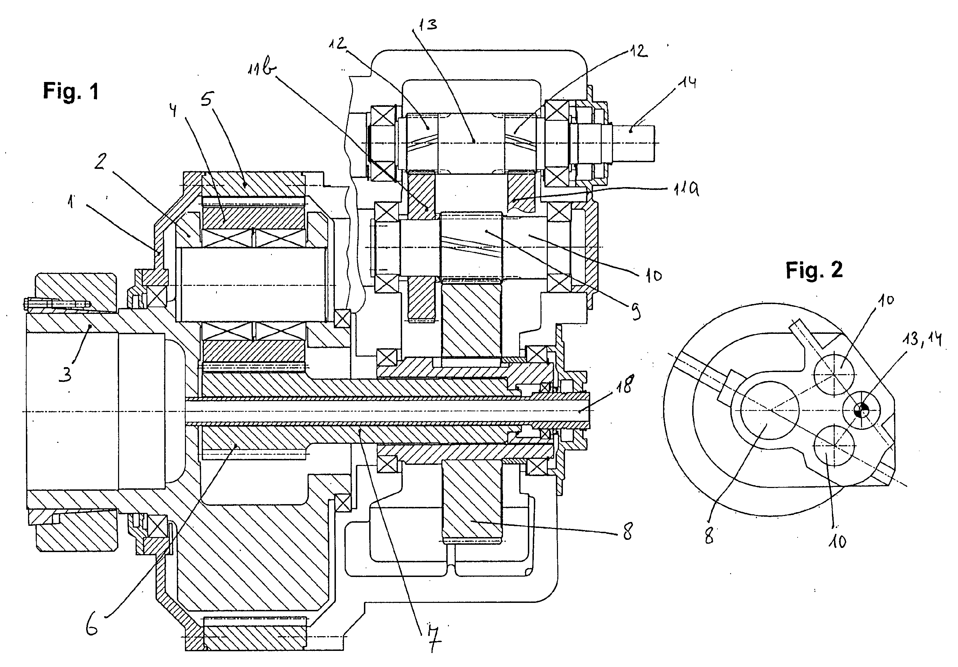

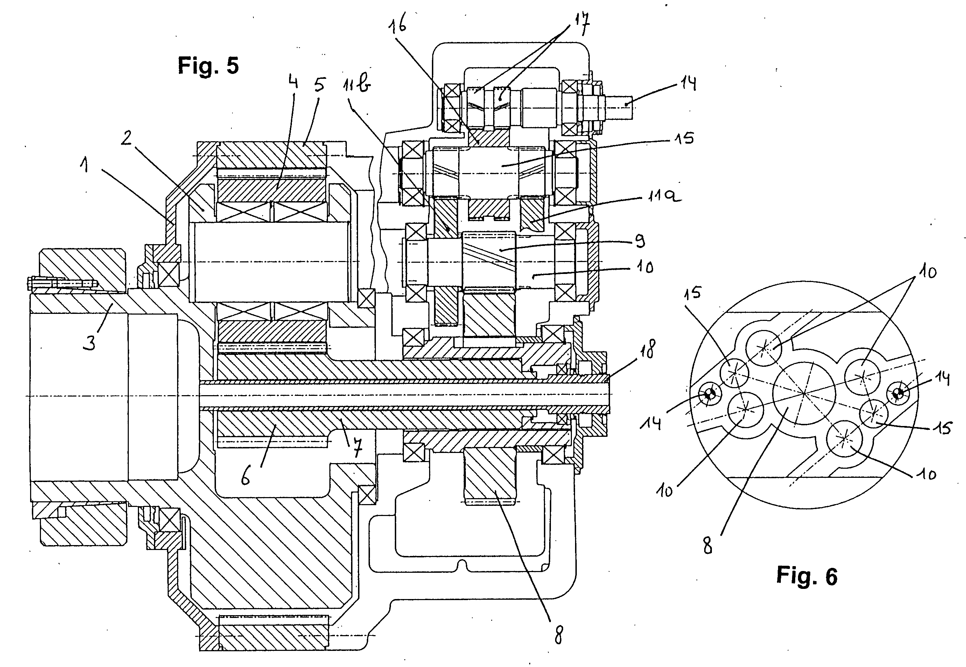

Das in Fig. 5 dargestellte Getriebe stimmt weitgehend mit dem Getriebe gemäß Fig. 3 und 4 überein. Jedoch ist das Großzahnrad 8 von vier Ritzelwellen 10 umgeben, die jeweils ein schrägverzahntes Zahnrad 11a, 11b tragen. Die Zahnräder 11a, 11b sind wechselweise vor und hinter dem Großzahnrad 8 angeordnet. Jeweils zwei Zahnräder 11a, 11b mit einer unterschiedlichen Steigungsrichtung der Schrägverzahnung bilden ein Räderpaar. Jedes der Räderpaare kämmt entweder direkt mit einer Ausgangswelle 14, wie im Zusammenhang mit der Fig. 1 beschrieben, oder indirekt über eine im Zusammenhang mit der Fig. 3 beschriebenen doppelschrägverzahnten Stirnradstufe mit einer Ausgangswelle 14. Jede der beiden Ausgangswellen 14 ist mit einem Generator verbunden.

Alle doppelschrägverzahnten Ritzelwellen 13, 14, 15 sind in dem Getriebegehäuse 1 nur in Radiallagern gelagert, die vorzugsweise als für hohe Drehzahlen zugelassene Zylinderrollenlager ausgebildet sind.

Durch einen Ölpressverband zwischen Ritzel 10 und Rad 11a können die Teile während der Montage stufenlos zueinander verdreht werden, wodurch die Zahnflanken dieser Teile problemlos mit dem Gegenstück bei der richtigen axialen Lage zum Eingriff gebracht werden können.

## Patentansprüche

1. Getriebe für eine aus Rotor und Generator bestehende Windkraftanlage mit einer mit dem Rotor verbundenen Planetenstufe als erster Stufe einer Leistungsverteilung und mit einer der Planetenstufe nachgeordneten und von dieser angetriebenen Stirnradstufe, **dadurch gekennzeichnet, dass** die Stirnradstufe als zweite Stufe der Leistungsverteilung ausgebildet ist und ein von der Planetenstufe angetriebenes Großzahnrad (8) aufweist, das von mindestens zwei Ritzelwellen (10) umgeben ist, deren Zahnritzel (9) mit dem Großzahnrad (8) kämmen, wobei die Ritzelwellen (10) je ein Zahnrad (11a, 11b) tragen und zwei Zahnräder (11a, 11b) jeweils ein Räderpaar bilden, wechselweise vor und hinter dem Großzahnrad (8) angeordnet sind, mit einer Schrägverzahnung von unterschiedlicher Steigungsrichtung versehen sind und mit einer gemeinsamen, doppelschrägverzahnten, axial frei gelagerten Ritzelwelle (13) in Eingriff stehen, die als Ausgangswelle (14) ausgebildet und mit dem Generator verbunden ist.

2. Getriebe nach Anspruch 1 **dadurch gekennzeichnet, dass** das Großzahnrad (8) von vier Ritzelwellen (10) umgeben ist, deren Zahnritzel (9) mit dem Großzahnrad (8) kämmen, wobei die Ritzelwellen (10) je ein Zahnrad (11a, 11b) tragen und zwei Zahnräder (11a, 11b) jeweils ein Räderpaar bilden und wechselweise vor und hinter dem Großzahnrad (8) angeordnet, mit einer Schrägverzahnung von unterschiedlicher Steigungsrichtung versehen sind, dass jeweils ein Räderpaar mit einer gemeinsamen, doppelschrägverzahnten, axial frei gelagerten Ritzelwelle (15) in Eingriff steht und dass diese Ritzelwellen (15) mit jeweils einer mit einem Generator verbundenen Ausgangswelle (14) in Eingriff stehen.

3. Getriebe nach Anspruch 1 oder 2, **dadurch gekennzeichnet, dass** zwischen der gemeinsamen Ritzelwelle (10) und einer separaten jeweils mit einem Generator verbundenen Ausgangswelle (14) eine weitere Stirnradstufe (Ritzelwelle 15) mit Doppelschrägverzahnung angeordnet ist.

4. Getriebe nach einem der Ansprüche 1 bis 3, **dadurch gekennzeichnet, dass** das Großzahnrad (8) der Stirnradstufe und das Sonnenrad (6) der Planetenstufe auf der Sonnenradwelle (7) angeordnet sind, dass die Sonnenradwelle (7) eine Hohlwelle ist, durch die eine mit dem Planetenträger (2) verbundenen und in dem Getriebegehäuse (1) gelagerten Welle (18) hindurchgeführt ist.
